# EUROPÄISCHE PATENTSCHRIFT

(11) **EP 2 707 926 B1**
(45) Veröffentlichungstag und Bekanntmachung des Hinweises auf die Patenterteilung: **02.01.2019**
(21) Anmeldenummer: 12731283.3
(22) Anmeldetag: 11.05.2012
(51) Int. Cl.: H01R 9/24, H01R 13/58

(54) **ANSCHLUSSVORRICHTUNG ZUM ELEKTRISCHEN VERBINDEN EINES KABELS, SOWIE ELEKTRISCHES GERÄT**
CONNECTION DEVICE FOR ELECTRICALLY CONNECTING A CABLE, AND ELECTRIC DEVICE
DISPOSITIF DE RACCORDEMENT POUR LA LIAISON ÉLECTRIQUE D'UN CÂBLE, ET APPAREIL ÉLECTRIQUE

(30) Priorität: 13.05.2011 AT 2762011 U; 13.05.2011 AT 2752011 U
(43) Veröffentlichungstag der Anmeldung: 19.03.2014
(73) Patentinhaber: Electro Terminal GmbH & Co KG, 6020 Innsbruck (AT)
(72) Erfinder: MOSER, Peter, A-6210 Wiesing (AT)
(74) Vertreter: Kiwit, Benedikt
(86) Internationale Anmeldenummer: PCT/AT2012/000132
(87) Internationale Veröffentlichungsnummer: WO 2012/155164

(56) Entgegenhaltungen:
- EP-A2- 0 183 939
- EP-A2- 1 345 285
- DE-U1-202004 004 297
- GB-A- 2 122 431
- US-A- 4 421 376
- US-B1- 6 231 376

## Beschreibung

Die Erfindung betrifft eine Anschlussvorrichtung zum elektrischen Verbinden eines Kabels, insbesondere als Anschlusskabel, mit zumindest einer elektrischen Leitung an einem elektrischen Gerät, nach dem Oberbegriff des Anspruchs 1 oder 9, sowie ein elektrisches Gerät.

Solche Anschlussvorrichtungen werden auch Kabelanschlussdosen genannt. Sie ermöglichen das elektrisch leitende Verbinden von Leitern bzw. Leiterdrähten eines elektrischen Kabels mit einem in einem Gehäuse angeordneten Kontaktelement. Das Kontaktelement ist anschließend mit einem weiteren elektrischen Apparat, zum Beispiel einer Leuchte oder einem Haushaltsgerät, angeschlossen.

Eine Kabelanschlussdose dieser Art ist in die DE 20 2007 009 291 U1 beschrieben. Sie weist eine Kabeldurchführung für das Anschlusskabel auf, sowie eine Zugentlastung in der Kabelführung zum Arretieren des Anschlusskabels in der Kabelanschlussdose. Dazu ist in der Kabelanschlussdose wenigstens ein Kontaktelement zur Kontakterstellung des Anschlusskabels vorhanden. Allerdings ist das Kontaktelement fix im Gehäuse der Kabelanschlussdose eingebettet. Abhängig vom Geräte-Typ gibt es verschiedene Kontaktelemente und dadurch sind verschiedene Kabelanschlussdosen notwendig. Zusätzlich wird das Anschlusskabel nur in horizontaler Richtung aus der Kabeldurchführung geführt. Für jede unterschiedliche Variante von Geräte-Typ, Anschlusskontakt und/oder Einbau wird eine eigene Kabelanschlussdose angefertigt.

Beispielsweise aus der DE 196 07 191 A1 und der DE 199 49 386 C2 sind weitere Kabelanschlussdosen zu entnehmen, die die vorher genannten Nachteile auch aufweisen.

Weiterhin ist die Bauhöhe bekannter Kabelanschlussdosen nicht zu unterschätzen. Dazu ragen die bekannten Kabelanschlussdosen überwiegend außerhalb des elektrischen Gerätes. Dies kann in manchen Einbausituationen nachteilig sein.

Das Dokument EP1345285 offenbart eine Anschlussvorrichtung zum Verbinden eines Kabels mit einer elektrischen Leitung an einem elektrischen Gerät gemäss dem Präambel vom Anspruch 1.

Der Erfindung liegt die Aufgabe zugrunde, eine Anschlussvorrichtung der eingangs angegebenen Arten so auszugestalten, dass die Anschlussvorrichtung für mehrere bzw. verschiedene Einbausituationen und/oder Geräte-Typen angewendet wird. Besonders soll die Bauhöhe der Anschlussvorrichtung niedrig gehalten werden und die Herstellkosten sollen für das gesamte Sortiment der Änschlussvorrichtungen reduziert werden. Dazu soll die Gestaltung der Anschlussvorrichtung vereinfacht werden. Ferner soll die Montage und die Kabelsicherung bzw. -fixierung der Anschlussvorrichtung verbessert werden.

Die Lösung der Aufgaben erfolgt erfindungsgemäß durch die in den unabhängigen Ansprüchen angegebenen Merkmale.

Die Anschlussvorrichtung zum elektrischen Verbinden eines Kabels mit zumindest einer elektrischen Leitung an einem elektrischen Gerät weist ein Gehäuse auf, wobei das Gehäuse zumindest ein Gehäuse-Unterteil und ein Gehäuse-Oberteil aufweist, wobei die Anschlussvorrichtung zumindest ein Stanzteil zur elektrischen Verbindung des Kabels mit zumindest einer elektrischen Leitung aufweist, welches im Gehäuse vorhanden ist und das Gehäuse zumindest zum Teil in einem elektrischen Gerät-Gehäuse, vorzugsweise eingesteckt, angeordnet ist.

Ein wesentliches Merkmal der Anschlussvorrichtung ist, dass die Anschlussvorrichtung ein Stanzteil-Modul aufweist, wobei der zumindest ein Stanzteil im Stanzteil-Modul angeordnet ist und wobei das Stanzteil-Modul im Gehäuse-Unterteil eingesetzt ist.

Vorteil dieser Anschlussvorrichtung, die bevorzugt als Kabelanschlussdose angewendet werden kann, ist, dass ein Grundmodul vorgesehen ist und verschiedene Baugruppen, hier Stanzteil-Module, im Grundmodul eingesetzt werden können.

Das Grundmodul beinhaltet unter anderem das Gehäuse mit zumindest dem Gehäuse-Unterteil und dem Gehäuse-Oberteil. Die Stanzteile, die als Kontaktelemente für die Leiter des Anschlusskabels vorgesehen sind, können in einem kleineren Modul, hier als Stanzteil-Modul genannt, vorgesehen werden. Nur das Stanzteil-Modul soll für die unterschiedlichen Anschlussmöglichkeiten der unterschiedlichen bzw. neuen Produkte, die andere Stanzteile benötigen, angepasst werden. Der Rest der Anschlussvorrichtung, hier als Grundmodul bezeichnet, bleibt vorhanden. Die Konstruktion und die Herstellung der Anschlussvorrichtung werden dadurch vereinfacht.

Das Grundmodul der Anschlussvorrichtung kann vorzugsweise aus Kunststoff ausgebildet werden. Das Gehäuse des Stanzteil-Moduls kann vorzugsweise auch aus Kunststoff ausgebildet werden. Die Stanzteile bzw. Kontaktelemente können im Gehäuse des Stanzteil-Moduls eingesetzt werden.

Beispielsweise kann das Stanzteil-Modul im Gehäuse-Unterteil des Grundmoduls eingeschnappt werden. Andere Möglichkeiten, wie geschraubt oder andere an sich bekannte Verbindungsmöglichkeiten, sind nicht auszuschließen.

Ein weiteres wesentliches Merkmal der Erfindung ist, dass zumindest ein Stanzteil abgewinkelt ist. Vorzugsweise können alle Stanzteile der Anschlussvorrichtung abgewinkelt, um die Bauhöhe der Anschlussvorrichtung reduzieren bzw. niedrig halten zu können.

Es ist nicht auszuschließen, dass dieses Merkmal auch bei Anschlussvorrichtungen angewendet werden kann, die ein mit dem Gehäuse-Unterteil einstückiges Stanzteil-Modul aufweisen.

Dies ist vorteilhaft vor allem wenn wenig Platz im elektrischen Gerät oder außerhalb vom elektrischen Gerät vorhanden ist. Durch die abgewinkelten Stanzteile kann der Anschluss mit der weiteren elektrischen Leitung erfindungsgemäß in einer horizontalen Ebene bzw. in einer Ebene parallel zu der Ebene des Anschlusses der Leiter des Kabels mit den Stanzteilen erfolgen. Der Anschluss mit der weiteren elektrischen Leitung erfolgt nicht mehr in vertikaler Richtung und ist dadurch in der Höhe platzsparend.

Wenn die Stanzteile abgewinkelt sind, ist die modulare Bauweise vom Vorteil, um die Herstellkosten der Anschlussvorrichtung zu reduzieren. Die abgewinkelten Stanzteile können im Stanzteil-Modul in einfacher Weise montiert werden und das Stanzteil-Modul kann anschließend im Grundmodul der Anschlussvorrichtung montiert werden. Die Montage von abgewinkelten Stanzteilen in einem einstückig gespritzten Anschlussvorrichtungsgehäuse kann unter Umständen nachteilig bzw. nicht möglich sein.

Die Bauhöhe der Anschlussvorrichtung kann aufgrund der abgewinkelten Stanzteile näherungsweise um den Unterschied zwischen der Höhe eines geraden Stanzteils und des erfindungsgemäßen abgewinkelten Stanzteils reduziert werden.

Bevorzugt wird, dass das Stanzteil-Modul in einer Aussparung des Gehäuse-Unterteils angeordnet werden kann.

Ein wesentlicher Vorteil der Erfindung ist, wenn das Stanzteil-Modul austauschbar sein kann.

Um die Austauschbarkeit gewährleisten zu können, kann beispielsweise jedes Stanzteil-Modul einen Rahmen aufweisen, der passend zum Einsatz im Gehäuse-Unterteil des Grundmoduls sein soll. Der Rahmen jedes Stanzteil-Moduls soll bestehend bleiben, die restliche Form des Stanzteil-Moduls hängt von den Kontaktstellen ab. Die Form bzw. die Kontur des Rahmens des Stanzteil-Moduls passt zur Kontur der Aussparung des Gehäuse-Unterteils des Grundmoduls, um befestigt bzw. verbunden werden zu können.

Dazu kann der Gehäuse-Unterteil Rastelemente, vorzugsweise als federnde Elemente und Abstützfläche, aufweisen, die für die Befestigung des Rahmens des Stanzteil-Moduls vorgesehen sein können. Eine werkzeuglose Montage bzw. Befestigung des Stanzteil-Moduls im Grundmodul kann bevorzugt werden.

Weiterhin kann die Anschlussvorrichtung zumindest eine Schraube aufweisen, die zur Befestigung eines Leiters des Kabels bzw. Anschlusskabels mit dem Stanzteil zur elektrischen Kontaktierung vorgesehen ist. Wesentlich ist, dass zumindest eine Arretierung für die Schraube im offenen Zustand vorgesehen sein kann.

Vorteil hier ist, dass die Montage bzw. der Leiteranschluss vereinfacht wird, wenn der Monteur die Schrauben nicht zuerst öffnen muss, sondern die Leiter direkt einstecken kann. Die Anschlussvorrichtung kann somit mit offenen Schrauben geliefert werden.

Bevorzugt wird, dass die Arretierung am Stanzteil-Modul angeordnet ist.

Die Arretierung kann beispielsweise ein Steg sein, der bevorzugt einstückig mit dem Gehäuse des Stanzteil-Moduls ausgebildet ist. Die Arretierung begrenzt das Herausdrehen und den Ausfall der Schraube aus dem Stanzteil.

Weiterhin kann die Anschlussvorrichtung eine Zugentlastung aufweisen, die zum Arretieren des Kabels bzw. Anschlusskabels in der Anschlussvorrichtung vorhanden ist, wobei im montierten Zustand die Zugentlastung mittels Elemente des Gehäuse-Oberteils des Grundmoduls gegen ein ungewolltes Öffnen gesichert sein kann.

Im montierten Zustand der Anschlussvorrichtung verhindert die Zugentlastung ein Herausrutschen des eingelegten Kabels. Die Zugentlastung soll dadurch gegen ein ungewolltes Öffnen gesichert werden. Sie kann mit gesonderten Mitteln gesichert werden oder sie kann erfindungsgemäß mit vorhandenen Mitteln gesichert werden, die eine andere Funktion erfüllen, wie zum Beispiel Elemente des Gehäuse-Oberteils, die zum Verschluss und zur Befestigung des Gehäuse-Oberteils mit dem Gehäuse-Unterteil vorgesehen sind. Im geschlossenen bzw. montierten Zustand des Deckels können die Befestigungselemente des Deckels, beispielsweise als Rastelemente, die Öffnung des eingerasteten Schwenkarmes der Zugentlastung sperren.

Wenn das Gehäuse-Oberteil, d.h. der Deckel, die Zugentlastung abdeckt und das Anschlusskabel von der Kabeldurchführung des Gehäuse-Oberteils aus der Anschlussvorrichtung herausragt, könnte es vorkommen, dass das Gehäuse-Oberteil unbeabsichtigt geöffnet wird, wenn das Anschlusskabel in die Höhe gezogen wird. Dadurch wird bevorzugt, dass das freie Ende des Deckelteils der Anschlussvorrichtung mit der Kabeldurchführung vor der Zugentlastung vorgesehen ist. Als zusätzlicher Vorteil ist eine Materialeinsparung gegeben.

Erfindungsgemäß ist auch eine Anschlussvorrichtung zum elektrischen Verbinden eines Kabels mit zumindest einer elektrischen Leitung an einem elektrischen Gerät vorgesehen, die ein Gehäuse aufweist, wobei das Gehäuse zumindest zum Teil in einem elektrischen Gerät-Gehäuse, vorzugsweise eingesteckt, angeordnet ist und wobei das Kabel im Gehäuse angeschlossen ist und aus der Anschlussvorrichtung herausrägt.

Ein wesentliches Merkmal ist, dass die Anschlussvorrichtung Mittel aufweisen kann, die die Auslenkung des Kabels aus der Anschlussvorrichtung wahlweise in vertikaler und/oder horizontaler Richtung vorgeben kann. Die Mittel können bewegbar angeordnet sein.

Für manche Anwendungen wird bevorzugt, dass die Anschlussvorrichtung flach gehalten wird. Die Anschlussvorrichtung wird üblicherweise im Gehäuse des elektrischen Geräts eingebaut und es ist oft vom Vorteil, dass der Gehäuse-Oberteil nur gering über das Gerät-Gehäuse ragt. Für andere Anwendungen besteht keinen besonderen Anlass, eine geringe Höhe einzuhalten, die Anschlussvorrichtung und/oder das Anschlusskabel können in diesem Fall oberhalb des Gerät-Gehäuses ragen. Um auch eine geringe Höhe einhalten zu können, kann die Anschlussvorrichtung für alle Varianten im Gerät-Gehäuse versenkt werden. Die Position und Führung des Anschlusskabels außerhalb der Anschlussvorrichtung bleibt trotzdem dem Kunden überlassen. Die Erfindung soll dadurch eine flexible bzw. variable Führung des Anschlusskabels aus der Anschlussvorrichtung ermöglichen, damit jegliche Weiterführung des Anschlusskabels außerhalb der Anschlussvorrichtung vorgesehen werden kann. Da es aber gewünscht ist, nur eine Anschlussvorrichtung für alle Anwendungen zu haben, soll eine Auslenkung des Anschlusskabels aus der Anschlussvorrichtung vorgesehen werden. Das Anschlusskabel soll gerade, d.h. in horizontaler Richtung, geführt werden können, wenn die Höhe der Anschlussvorrichtung mit dem Anschlusskabel über das Gerät-Gehäuse niedrig bleiben soll. Oder das Anschlusskabel kann nach oben, d.h. in vertikaler Richtung geführt werden können, wenn die Höhe an dieser Stelle keine Rolle spielen soll.

Bevorzugt können die Mittel zur Auslenkung des Kabels aus der Anschlussvorrichtung im oder am Gehäuse der Anschlussvorrichtung angeordnet werden. Vorteilhaft ist es, wenn die Mittel als Führung bzw. Abstützung für das Kabel vorgesehen sein können.

Für manche Anwendungen wird es bevorzugt, dass das Kabel aus der Anschlussvorrichtung nicht über das Gehäuse herausragt.

Beispielsweise können die Mittel als Lasche ausgebildet werden. Zusätzlich kann die Lasche flexibel und/oder insbesondere ausbrechbar ausgebildet werden. Andere Ausführungsformen der Mittel sind nicht auszuschließen. Insbesondere können die Mittel als Zusatzelemente ausgebildet werden, wobei das Gehäuse der Ausschlussvorrichtung eine Aussparung aufweist, in die die Zusatzelemente eingeklipst werden können, wenn das Kabel vertikal ausgeführt werden kann.

Gemäß einer Ausführungsform der Erfindung, kann die Lasche seitlich Spitzen aufweisen, die mit den jeweiligen Seitenwänden des Gehäuses verbunden werden können. Dies kann beispielsweise für eine vertikale Auslenkung des Anschlusskabels vorkommen. Andere Ausführungsformen sind nicht auszuschließen.

Zusätzlich kann die Lasche seitlich Spitzen aufweisen, diese Spitzen können von den jeweiligen Seitenwänden des Gehäuses abgebrochen bzw. abgetrennt werden. Dies kann beispielsweise für eine horizontale Auslenkung des Anschlusskabels vorkommen.

Es ist von Vorteil, wenn das freie Ende der Lasche sich auf dem Gerät-Gehäuse abstützen kann, damit die Lasche im montierten Zustand arretiert werden kann und als stabile Führung für das Anschlusskabel dienen kann. Die Abstützfläche am Gerät-Gehäuse kann unterschiedlich sein, abhängig in welcher Position sich die Lasche befindet.

Dazu kann das freie Ende der Lasche als Kantenschutz für das Anschlusskabel dienen.

Insbesondere kann zumindest ein Bügel am Gehäuse zur Fixierung des Kabels vorhanden werden. Dies kann als zusätzliche Fixierung des Kabels außerhalb des Gerät-Gehäuses dienen. Diese Fixierung kann vorzugsweise mit einem Kabelbinder erfolgen, wobei der Kabelbinder in dem zumindest einen Bügel am Gehäuse befestigt werden kann.

Weiterhin kann die Anschlussvorrichtung ein Gehäuse zumindest ein Gehäuse-Unterteil und ein Gehäuse-Oberteil aufweisen, wobei das Gehäuse-Unterteil zumindest eine Lasche aufweisen kann, die als Halterung für das Gehäuse-Oberteil vorgesehen ist.

Vorteil dieser Lasche ist, dass das Gehäuse-Oberteil bei der Montage und dem Anschluss der Anschlussvorrichtung im elektrischen Gerät oder sonstige Situationen, in einer offenen Position gehalten werden kann.

Bevorzugt wird, dass diese Lasche für die Herstellung bzw. Fertigung des Grundmoduls als Verbindungslasche zwischen dem Gehäuse-Unterteil und dem Gehäuse-Oberteil vorgesehen wird.

Die Erfindung betrifft außerdem auch ein elektrisches Gerät mit der erfindungsgemäßen Anschlussvorrichtung.

Das Gerät-Gehäuse vom elektrischen Gerät kann bevorzugt eine Vertiefung für die Weiterführung des Kabels aufweist, damit das Anschlusskabel nicht über die Höhe der Anschlussvorrichtung ragt.

Im Folgenden wird die Erfindung anhand Ausführungsformen näher beschrieben, die jedoch nur beispielhaft, nicht aber einschränkend aufzufassen sein sollen.

Es zeigen:
Fig. 1: perspektivische Ansicht einer erfindungsgemäßen Anschlussvorrichtung in einem ersten Gerät-Gehäuse montiert.
Fig. 2: Seitenansicht einer erfindungsgemäßen Anschlussvorrichtung in einem ersten Gerät-Gehäuse montiert.
Fig. 3: Explosionsansicht einer erfindungsgemäßen Anschlussvorrichtung mit einem ersten Gerät-Gehäuse.
Fig. 4: weitere Explosionsansicht einer erfindungsgemäßen Anschlussvorrichtung mit einem ersten Gerät-Gehäuse montiert.
Fig. 5: perspektivische Ansicht der unteren Seite einer erfindungsgemäßen Anschlussvorrichtung.
Fig. 6: Explosionsansicht von der oberen Seite gesehen einer erfindungsgemäßen Anschlussvorrichtung mit einem ersten Stanzteil-Modul.
Fig. 7: Explosionsansicht von der unteren Seite gesehen einer erfindungsgemäßen Anschlussvorrichtung mit einem ersten Stanzteil-Modul.
Fig. 8: Explosionsansicht eines zweiten Stanzteil-Moduls.
Fig. 9: perspektivische Ansicht von der Rückseite gesehen eines zweiten Stanzteil-Moduls.
Fig. 10: perspektivische Ansicht eines dritten Stanzteil-Moduls, wobei der Erdungskontakt getrennt dargestellt ist.
Fig. 11a: Ansicht von oben einer erfindungsgemäßen Anschlussvorrichtung.
Fig. 11b: Schnittansicht aus Fig. 11a.
Fig. 11c: Detailansicht aus Fig. 11b.
Fig. 12a: Seitenansicht einer erfindungsgemäßen Anschlussvorrichtung vor ihrer Montage.
Fig. 12b: Detailansicht aus Fig. 12a.
Fig. 13a: Seitenansicht einer erfindungsgemäßen Anschlussvorrichtung.
Fig. 13b: Detailansicht aus Fig. 13a.
Fig. 14a: weitere Seitenansicht einer erfindungsgemäßen Anschlussvorrichtung.
Fig. 14b: Detailansicht aus Fig. 14a.
Fig. 15: perspektivische Ansicht einer erfindungsgemäßen Anschlussvorrichtung in einem zweiten Gerät-Gehäuse montiert.
Fig. 16: weitere perspektivische Ansicht einer erfindungsgemäßen Anschlussvorrichtung in einem zweiten Gerät-Gehäuse montiert.
Fig. 17: perspektivische Ansicht von der unteren Seite gesehen einer erfindungsgemäßen Anschlussvorrichtung in einem zweiten Gerät-Gehäuse montiert.
Fig. 18: Seitenansicht einer erfindungsgemäßen Anschlussvorrichtung mit der Lasche in einer ersten Position.
Fig. 19: Seitenansicht einer erfindungsgemäßen Anschlussvorrichtung mit der Lasche in einer zweiten Position.
Fig. 20: Ansicht von oben einer erfindungsgemäßen Anschlussvorrichtung mit der Lasche in einer zweiten Position.

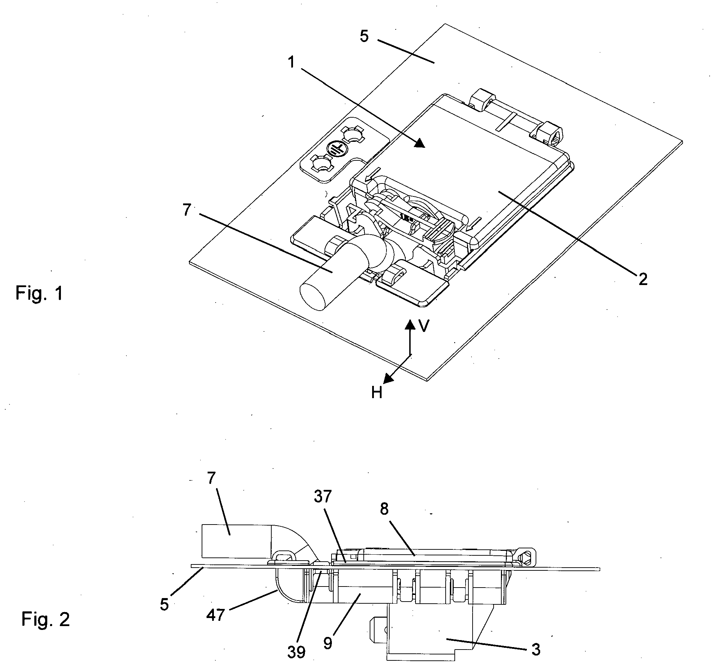

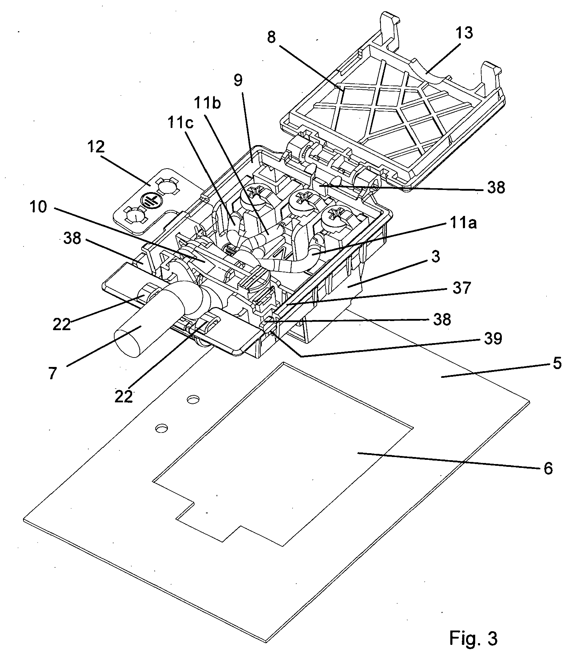

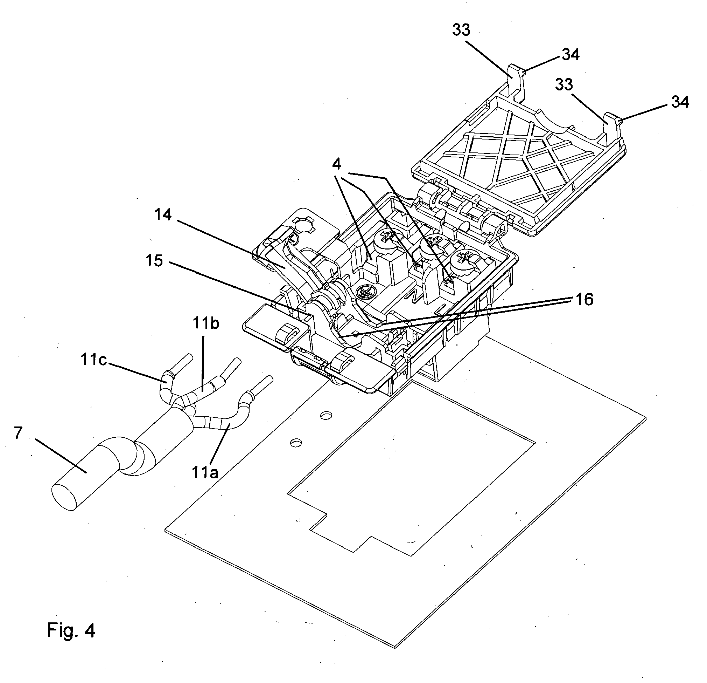

In Fig. 1 bis Fig. 4 ist eine erste erfindungsgemäße Anschlussvorrichtung 1 dargestellt. Die Anschlussvorrichtung 1 ist in einem elektrischen Gerät eingebaut, insbesondere in einem Haushaltsgerät, beispielsweise in einem Herd. Die Anschlussvorrichtung 1 ist vorzugsweise im Gerät-Gehäuse 5 eingebaut, wobei hier das Gerät-Gehäuse 5 nur schematisch dargestellt ist und das elektrische Gerät an sich nicht skizziert wurde.

Eine flache Anschlussvorrichtung wird bevorzugt. Der Kunde hat den Vorteil, dass er die flache Anschlussvorrichtung über die Geometrie der Blechausstanzung des Gerät-Gehäuses individuell platzieren kann, insbesondere bei Platzproblemen ins Gerät hinein. Beispielsweise ist es notwendig bei einer autarken Mulde, d.h. wenn das Kochfeld vom Herd getrennt ist, die sich oberhalb einer Schublade befindet, die Mulde und insbesondere die Anschlussvorrichtung so flach wie möglich zu halten, damit keine Kollision mit der Schublade entsteht. Die gesamte Höhe der Anschlussvorrichtung soll niedrig gehalten werden.

Die Anschlussvorrichtung 1 weist ein Gehäuse 2 auf. Ein Kabel 7, auch Anschlusskabel genannt, wird im Gehäuse elektrisch angeschlossen. Das Kabel 7 weist einen oder mehrere Leiter, hier drei Leiter 11a, 11b, 11c, auf, die einzeln elektrisch in den vorgesehenen Kontaktelementen im Gehäuse angeschlossen werden. Das Kabel 7 ragt aus der Anschlussvorrichtung 7 und befindet sich außerhalb des elektrischen Geräts.

Das Gehäuse 2 der Anschlussvorrichtung 1 weist zumindest ein Gehäuse-Unterteil 9 und ein Gehäuse-Oberteil 8 auf. Das Gehäuse-Oberteil 8 kann auch als Deckel bezeichnet werden. Im montierten Zustand ist der Deckel geschlossen und die elektrische Kontaktierung der Leiter 11 geschützt bzw. nicht zugänglich.

Das Gehäuse 2 ist in einer Aussparung 6 des Gerät-Gehäuses 5 montiert, hier wird das Gehäuse 2 in der Aussparung 6 eingesteckt. Die Aussparung 6 ist dementsprechend zugeschnitten, damit der Rahmen 37 des Gehäuses 2 bzw. des Gehäuse-Unterteils 9 sich entlang der Kontur der Aussparung 6 abstützen kann. Zusätzlich wird das Gehäuse 2 über Befestigungsmittel, hier beispielsweise über Schnappelementen, am Gerät-Gehäuse 5 befestigt, hier eingerastet. Zumindest ein federndes Element 38 mit einer Rastnase 39 ist vorhanden, insbesondere sind mehrere federnde Elemente 38 im Umfang des Gehäuses 2 vorgesehen, hier ist jeweils ein federndes Element 38 pro Seite der Anschlussvorrichtung 1 sowie ein federndes Element 38 im hinteren Bereich der Anschlussvorrichtung 1 vorgesehen. Das Blech des Gerät-Gehäuses 5 wird zwischen dem Rahmen 37 und den Rastnasen 39 eingeschnappt.

Die Bauweise der Anschlussvorrichtung 1 wird flach gehalten, d.h., dass die Höhe des Gehäuses 2, vor allem des Gehäuse-Oberteils 8, von der Oberfläche des Gerät-Gehäuses 5 in vertikaler Richtung V sehr niedrig ist. Es wird versucht, die Anschlussvorrichtung 1 im elektrischen Gerät zu versenken, so dass ein Großteil des Gehäuses 2, vor allem des Gehäuse-Unterteils 9, sich im elektrischen Gerät bzw. unterhalb der Oberfläche des Gerät-Gehäuses 5 befindet.

Das Kabel 7 wird in vertikaler Richtung V aus der Anschlussvorrichtung 1 ausgelenkt. Das elektrische Kabel 7 wird anschließend gebogen, um entlang dem Gerät-Gehäuse 5 in horizontaler Richtung H weitergeführt zu werden. In dieser erfindungsgemäßen Ausführungsform kann jedoch die niedrige Höhe der Anschlussvorrichtung 1 oberhalb des Gerät-Gehäuses 5 entscheidend sein, um eine Kollision mit einem unten stehenden Element vermeiden zu können. Das Kabel 7 wird in der Regel so positioniert, dass keine Kollision mit dem unten stehenden Element entsteht.

Da das Gehäuse 2 sich überwiegend im elektrischen Gerät befindet, erfolgt der elektrische Anschluss des Kabels 7 mit den Kontaktelementen bzw. mit Stanzteilen 4 unterhalb der Oberfläche des Gerät-Gehäuses 5. Das Kabel 7 muss dadurch in vertikaler Richtung V gebogen werden, um aus der Anschlussvorrichtung 1 ausgelenkt zu werden. Das Kabel 7 stützt sich auf der Lasche 47 am Gehäuse-Unterteil 9, diese Lasche 47 ermöglicht die Führung und die Auslenkung des Kabels 7 aus der Anschlussvorrichtung 1.

Die elektrische Kontaktierung erfolgt im Gehäuse 2, wobei ein eigenes Stanzteil-Modul 3 dafür vorgesehen ist. Dieses Stanzteil-Modul 3 ist im Gehäuse-Unterteil 9 angeordnet. Einerseits werden die Leiter 11a, 11b, 11c des Kabels 7 mit Stanzteilen 4 im Stanzteil-Modul 3 angeschlossen, anderseits, hier in unterer Seite des Stanzteil-Moduls 3, erfolgt eine weitere elektrische Verbindung. Das Stanzteil-Modul 3 ragt unterhalb vom Gehäuse-Unterteil 9.

Die Anschlussvorrichtung 1 weist eine Zugentlastung 10 für das Kabel 7 auf. Damit die elektrische Kontaktierung der Leiter 11 nicht zu sehr beansprucht wird, ist eine Zugentlastung vorhanden. Die Zugentlastung 10 kann vorzugsweise im Gehäuse-Unterteil 9 angeordnet werden. Die Auslenkung des Kabels 7 kann nach der Zugentlastung erfolgen.

Das Kabel 7 wird zwischen dem Schwenkarm 14 und den Führungselementen 16 der Zugentlastung 10 eingeklemmt.

Zusätzlich kann eine weitere Halterung für das Anschlusskabel 7 vorgesehen werden, wobei hier beispielsweise zwei Bügel 22 am Rahmen 37 des Gehäuse-Unterteils 9 seitlich vom Anschlusskabel 7 angeordnet sind. Ein hier nicht dargestellter Kabelbinder könnte durch die zwei Bügel 22 und über das Anschlusskabel 7 eingefädelt werden, um das Kabel 7 lagerichtig in horizontaler Richtung H zu positionieren.

Der Deckel 8 deckt das Stanzteil-Modul 3 und damit auch den elektrischen Anschluss der Leiter 11. Im geschlossenen Zustand hört der Deckel bzw. das Gehäuse-Oberteil 8 vor der Zugentlastung auf. Im Deckel 8 ist eine Kabeldurchführung 13 für das Kabel 7 vorgesehen.

Der Deckel 8 wird über ein Schnappmechanismus bzw. Rastmechanismus geschlossen, wobei federnde Elemente 33 des Deckels 8 im Gehäuse-Unterteil 9 eingerastet werden. Die Rastelemente 34 der federnden Elemente 33 werden im Gegenstücke im Gehäuse-Unterteil 9 eingerastet.

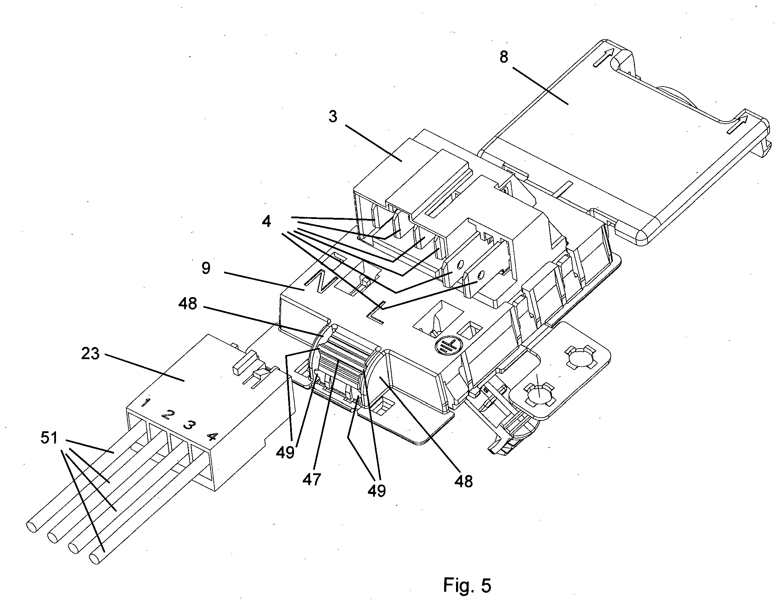

In Fig. 5 ist die Rückseite einer Ausführungsform der erfindungsgemäßen Anschlussvorrichtung 1 mit einer weiteren elektrischen Verbindung, hier als Stecker 23, insbesondere als genormter Rast 5-Stecker, abgebildet. Aus dem Stanzteil-Modul 3 ist das andere Ende der Stanzteile 4 vorhanden, die mit den elektrischen Leitungen 51 des elektrischen Gerätes über den Stecker 23 verbunden werden können. Diese elektrische Verbindung könnte auch über an sich bekannte Prinzipien erfolgen.

Die flexible Lasche 47 zur Führung und/oder Auslenkung des Kabels 7 ist mit einem Ende am Boden des Gehäuse-Unterteils 9 verbunden. Das andere Ende der Lasche 47 ist frei und ist auf der Höhe des Rahmens 37 des Gehäuse-Unterteils 9 positioniert.

Die flexible Lasche 47 weist entlang ihrer Seiten mehrere Spitzen 49 auf, die mit den Seitenwänden 48 des Gehäuse-Unterteils 9 verbunden sind. Die Lasche 47 hat eine durchgebrochene Verbindung mit den Seitenwänden 48 des Gehäuse-Unterteils 9. Falls das Kabel 7 nicht in die vertikale Richtung V ausgelenkt werden soll, sondern flach bzw. in der horizontaler Richtung H bleiben soll, kann die flexible Lasche 47 von den Seitenwänden 48 des Gehäuse-Unterteils 9 abgetrennt und/oder ausgebrochen werden. Dies kann insbesondere werkzeugslos erfolgen. Die flexible Lasche 47 kann auch mit vormontiertem Kabel 7 ausbrechbar sein, wobei Druck auf dem Kabel 7 ausgeübt wird.

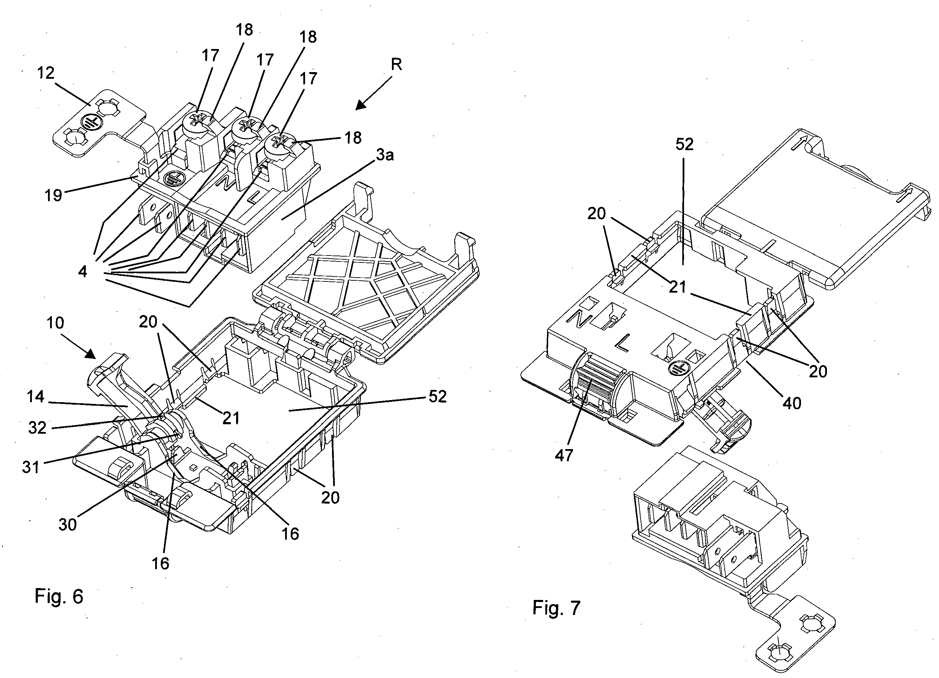

In Fig. 6 und Fig. 7 ist die Anschlussvorrichtung 1 dargestellt, wobei es ersichtlich ist, dass das Stanzteil-Modul 3 ein separates Modul vom Gehäuse 2 ist. Das Stanzteil-Modul 3 ist austauschbar bzw. es können verschiedene Stanzteil-Module im Grundmodul 2 eingesetzt werden. Da verschiedene elektrische Geräte eine verschiedene Anschlussvorrichtung benötigen, sieht die Erfindung eine Vereinfachung vor, wobei nur ein Teil der Anschlussvorrichtung spezifisch zu jedem elektrischen Geräts ist und der Rest der Anschlussvorrichtung universell einsetzbar bleibt. Die Anschlussvorrichtung 1 hat eine modulare Bauweise, unterschiedliche Baugruppen können im Grundmodul eingeschnappt werden. Dadurch kann die Produktfamilie der Anschlussvorrichtungen in einfacher Weise und in kurzer Zeit erweitert werden.

Im Grundmodul, hier im Gehäuse-Unterteil 9, ist eine Aussparung 52 für das Stanzteil-Modul 3 vorgesehen. Da es verschiedene Stanzteil-Module 3 gibt, die aber in der definierten Aussparung 52 eingesetzt werden sollen, weist jedes Stanzteil-Modul 3 ein Rahmen 19 auf, der passend zur Kontur der Aussparung 52 ist, damit jedes Stanzteil-Modul 3 im Grundmodul der Anschlussvorrichtung 1 angeordnet werden kann. Das Innenleben des Stanzteil-Moduls 3 kann individuell gestaltet werden.

In Fig. 6 und Fig. 7 ist eine beispielhafte Ausführungsform der Befestigung des Stanzteil-Moduls 3 im Gehäuse-Unterteil 9. Das Gehäuse-Unterteil 9 weist seitlich jeweils federnder Elemente 20 mit einer Haltenase, sowie eine Abstützfläche 21 auf. Der Rahmen 19 des Stanzteil-Moduls 3 wird zwischen den Haltenasen der federnden Elemente 20 und den Abstützflächen 21 eingeschnappt und dadurch gehalten. Andere Befestigungsmethoden des Stanzteil-Moduls 3 im Gehäuse-Unterteil 9 sind von der Erfindung nicht auszuschließen. Die Befestigung soll vorzugsweise werkzeugslos erfolgen.

Es ist nicht auszuschließen, dass weitere Ausführungsformen der Anschlussvorrichtung ein Stanzteil-Modul aufweisen, das einstückig mit dem Gehäuse-Unterteil ausgebildet ist, wobei diese weitere Ausführungsformen der Anschlussvorrichtung auch ein oder mehrere weiteren erfindungsgemäßen Merkmale auch aufweisen.

Ein Erdungskontakt 12 kann im Stanzteil-Modul 3 kontaktiert werden. Am Gehäuse-Unterteil 9 kann eine Aussparung 40 vorgesehen werden, damit der Erdungskontakt 12 aus der Anschlussvorrichtung 1 geführt werden kann. Es ist nicht auszuschließen, dass am Gehäuse-Unterteil 9 mehrere Aussparungen für den Erdungskontakt vorgesehen werden, damit mehrere Möglichkeiten für die Anordnung des Erdungskontakts bestehen, abhängig vom Aufbau der Kontaktierungselemente mit den Stanzteilen 4 im Stanzteil-Modul 3.

In Fig. 6 ist sind die Nasen 31 und 32 mit der Lasche 30 der Zugentlastung 10 dargestellt. Die Nasen 31 und 32 sind am Schwenkarm 14 der Zugentlastung 10 angeordnet und können den Schwenkarm 14 in verschiedenen offenen Positionen halten, wenn sie über die Lasche 30 drüber müssen.

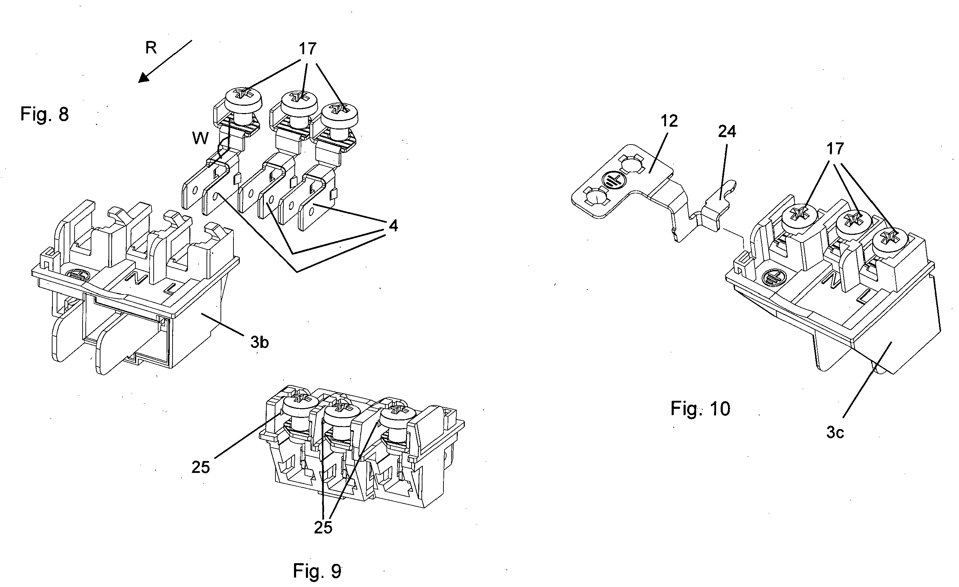

In Fig. 6, Fig. 8 und Fig. 10 sind verschiedene Stanzteil-Module 3a, 3b und 3c dargestellt, wobei sowohl die elektrische Verbindung zwischen den Stanzteilen 4 und den Leitern 11, als auch die elektrische Verbindung der Stanzteilen 4 mit weiteren Leitungen 51 sich unterscheiden kann. Die Anzahl der Anschlüsse kann auch beliebig sein. Es können Standard aber auch gesonderte Stanzteile verwendet werden. Verschiedene Stanzteil-Module sind notwendig, da es unterschiedliche Anschlussmöglichkeiten und unterschiedliche Bauhöhen gibt. Wenn die Anschlussvorrichtung sehr flach gehalten werden soll, d.h. wenn die Höhe der Anschlussvorrichtung innerhalb und/oder außerhalb des elektrischen Geräts niedrig sein soll, kommen insbesondere gesonderte Stanzteile im Einsatz. In Fig. 8 ist eine Ausführungsform der abgewinkelten Stanzteile 4 dargestellt, wobei beide Stege der Stanzteile 4 mit einem Winkel W zueinander stehen. Der Winkel W kann nahezu 90° betragen.

Im Stanzteil-Modul können verschiedene an sich bekannte Kontaktierungsprinzipien angewendet werden, beispielsweise mit Schrauben, mit Steck-Schneid-Technik, mit einem Stecker, usw...

Hier wird eine elektrische Kontaktierung der Leiter 11 mit den Stanzteilen 4 bzw. mit den Kontaktierungselementen über die Schrauben 17 bevorzugt. Andere Möglichkeiten sind wiederum nicht auszuschließen. Es ist von Vorteil, wenn die Anschlussvorrichtung 1 mit offenen Schrauben 17 geliefert werden kann, damit die Leiter 11 direkt eingesteckt werden können. Um die Schrauben 17 im offenen Zustand zu halten, ohne dass sie sich von den Stanzteilen 4 lösen, ist eine Arretierung 18 vorgesehen. Diese Arretierung 18 kann im Gehäuse des Stanzteil-Moduls 3 einstückig vorgesehen werden und den Kopf der Schrauben 17 halten. Dies ist aber nur möglich, wenn die Stanzteile 4 mit den Schrauben 17 von hinten, d.h. in Richtung R, im Stanzteil-Modul eingebaut werden, wie in den dargestellten Varianten 3a und 3b des Stanzteil-Moduls.

In der Variante 3c ist keine gesonderte Arretierung vorhanden. Die Schrauben 17 könnten alternativ eine Selbstarretierung aufweisen, wobei z.B. eine Kerbe im ersten oder zweiten Gewindegang vorgesehen werden könnten.

Weitere Ausführungsformen, damit die Schraube in ihrer offenen Position bleiben kann, sind nicht dargestellt und werden nicht im Detail beschrieben, sind aber nicht auszuschließen.

In Fig. 9 ist zusätzlich jeweils eine Führungsschiene 25 im Gehäuse des Stanzteil-Moduls 3 für die Positionierung der offenen Schrauben 7 vorgesehen.

Der Erdungskontakt 12 kann über eine Lasche 24 mit einem Stanzteil 4 verbunden werden.

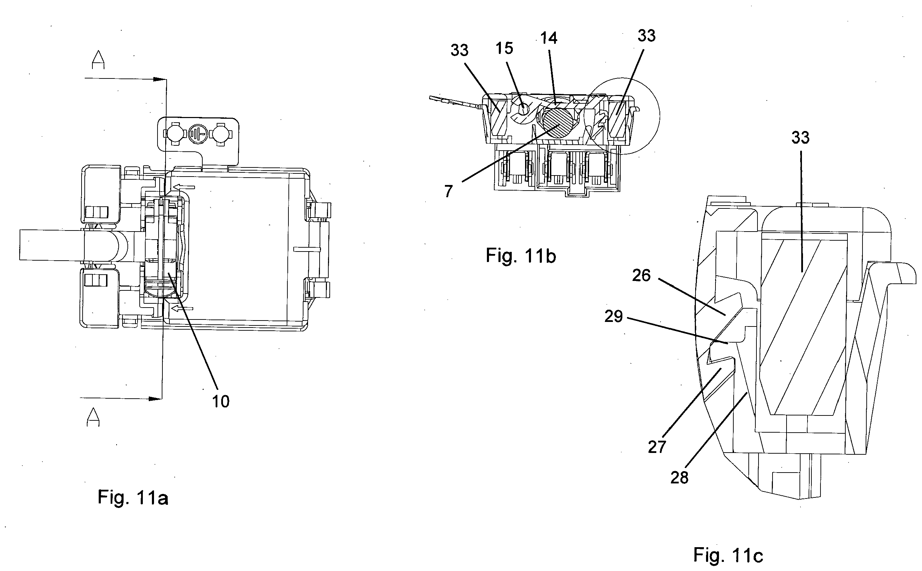

In Fig. 11a, 11b und 11c sind die Verrastung und die Sicherung der Zugentlastung 10 dargestellt. Die Zugentlastung 10 wird über die federnden Elementen 33 bzw. Deckelschnapper zusätzlich fixiert. Der Schwenkarm 14 der Zugentlastung 10 ist drehbar über das Drehlager 15 gelagert. Das Gehäuse-Unterteil 9 weist ein federndes Element 28 mit einer Rastnase 29 auf. Im geschlossenen Zustand des Schwenkarms 14, rasten die hier als Haken dargestellten Rastelemente 26 und 27 am freien Ende des Schwenkarms 14 um die Rastnase 29.

Die federnde Elemente 33 des Gehäuse-Oberteils 8 sind vom Deckel seitlich der Zugentlastung 10 vorgezogen und verrasten im Gehäuse-Unterteil 9. Das federnde Element 33, das sich auf der Seite des freien Ende des Schwenkarmes 14 befindet, wird auf der Höhe des federnden Elements 28 im Gehäuse-Unterteil 9 verrastet. Das federnde Element 33 des Deckels 8 im geschlossenen Zustand verhindert dadurch eine Federung des federnden Elements 28 und der Schwenkarm 14 der Zugentlastung 10 kann nicht versehentlich entriegelt werden. Dies ist wesentlich, wenn eine schraublose Zugentlastung bevorzugt wird. Eine gewisse erforderliche Haltekraft und Verriegelung des Kabels soll von der Zugentlastung gegeben werden.

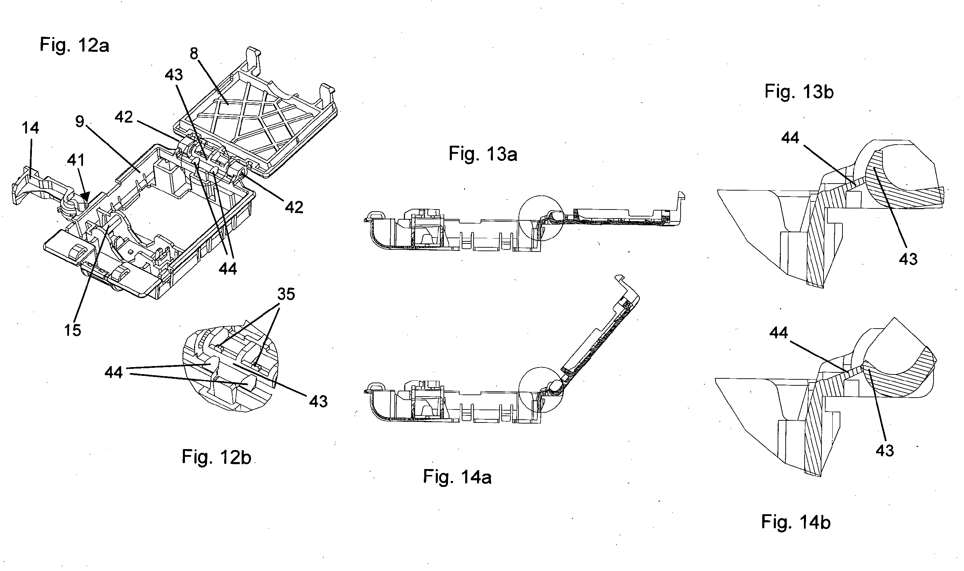

In den Figuren 12a bis 14b ist einerseits die drehbare Verbindung zwischen dem Gehäuse-Unterteil 9 und dem Gehäuse-Oberteil 8 gezeigt und anderseits die Anbindung des Schwenkarmes 14 der Zugentlastung 10 zum Gehäuse-Unterteil 9 bei der Herstellung bzw. Fertigung des Gehäuses 2.

Das Gehäuse 2 ist vorzugsweise aus Kunststoff. Der Schwenkarm 14 der Zugentlastung 10 wird über ein Filmscharnier 41 seitlich zum Gehäuse-Unterteil 9 gefertigt bzw. gespritzt. Der Schwenkarm 14 kann anschließend vom Gehäuse-Unterteil 9 abgebrochen werden, insbesondere durch eine Drehbewegung, und auf dem Drehlager 15 montiert bzw. geklipst werden.

Das Gehäuse-Oberteil 8 ist drehbar zum Gehäuse-Unterteil 9 über die Drehlager 42 gelagert. Bei der Fertigung bzw. Herstellung des Gehäuses 2, d.h. beim Spritzen, sind die Laschen 44 des Gehäuse-Unterteils 9 mit der Drehachse 43 des Gehäuse-Oberteils 8 verbunden. Es wirkt als Filmscharnier. Bei der ersten Betätigung des Deckels 8 wird diese Verbindung gebrochen bzw. abgerissen und die Laschen 44 wirken anschließend als Positionierung des offenen Deckels 8 in einer bestimmten Winkelposition. Zusätzlich beim Schließen des Deckels 8 können die Noppen 35 über die Laschen 44 rattern bzw. federn.

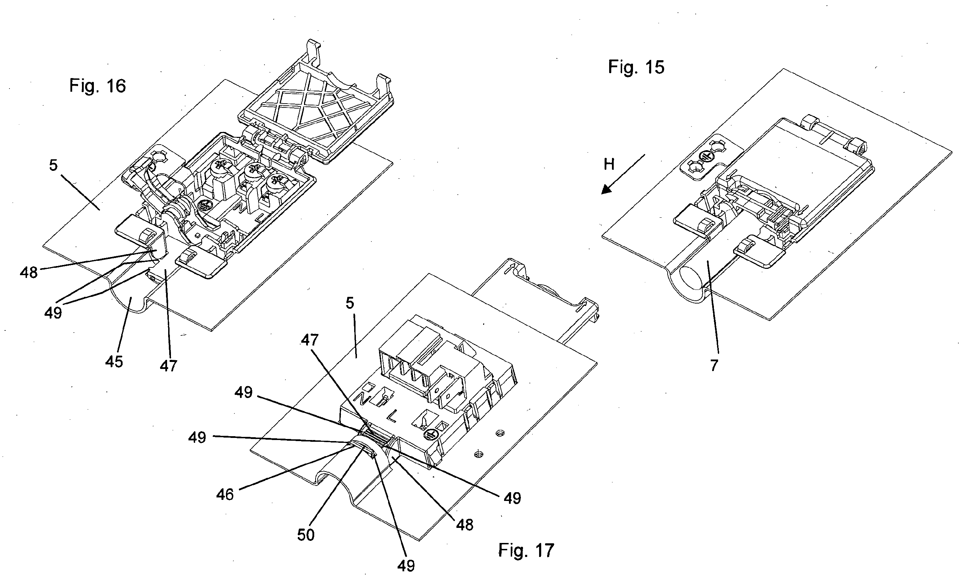

In Fig. 15, Fig. 16 und Fig. 17 ist eine andere Ausführungsform der erfindungsgemäßen Anschlussvorrichtung 1 dargestellt. Das Gerät-Gehäuse 5 weist eine Vertiefung 45 auf, die für die Weiterführung des Kabels 7 außerhalb der Anschlussvorrichtung 1 gedacht ist. In manchen Situationen ist es gewünscht, dass die Höhe der Anschlussvorrichtung 1 und des Kabels 7 nur von wenigen Millimetern über das Gerät-Gehäuse 5 hinaus geht. Das Kabel 7 soll auch nicht höher angeordnet werden, als die Höhe des Deckels 8 außerhalb des Geräts-Gehäuses 5. Der Hersteller des elektrischen Geräts soll eine Vertiefung 45 im Gerät-Gehäuse 5 vorsehen, um das Kabel 7 versenken zu können.

Das Kabel 7 soll hier horizontal bzw. in horizontaler Richtung H aus der Anschlussvorrichtung 1 herauskommen. Um dies zu ermöglichen, kann die erfindungsgemäße flexible Lasche 47 von den Seitenwänden 48 des Gehäuse-Unterteils 9 getrennt werden, wobei die jeweiligen Filmscharniere zwischen den Spitzen 49 der Lasche 47 und den Seitenwänden 48 abgebrochen werden. Die Lasche 47 kann flexibel wie ein Ziehharmonika sein.

Die ausbrechbare Lasche 47 kann anschließend in der Vertiefung 45 gestreckt werden, wobei das Kabel 7 über die flach gelegte Lasche 47 ausgelenkt wird. Die Vertiefung 45 kann einen Schlitz bzw. eine Aussparung 46 aufweisen, wobei das freie Ende 50 der Lasche 47 in dieser Aussparung 46 eingerastet werden kann. Jeweils eine Spitze 49 links und rechts des Endes 50 der Lasche 47 kann als zusätzliche Verrasterung in der Vertiefung 45 dienen.

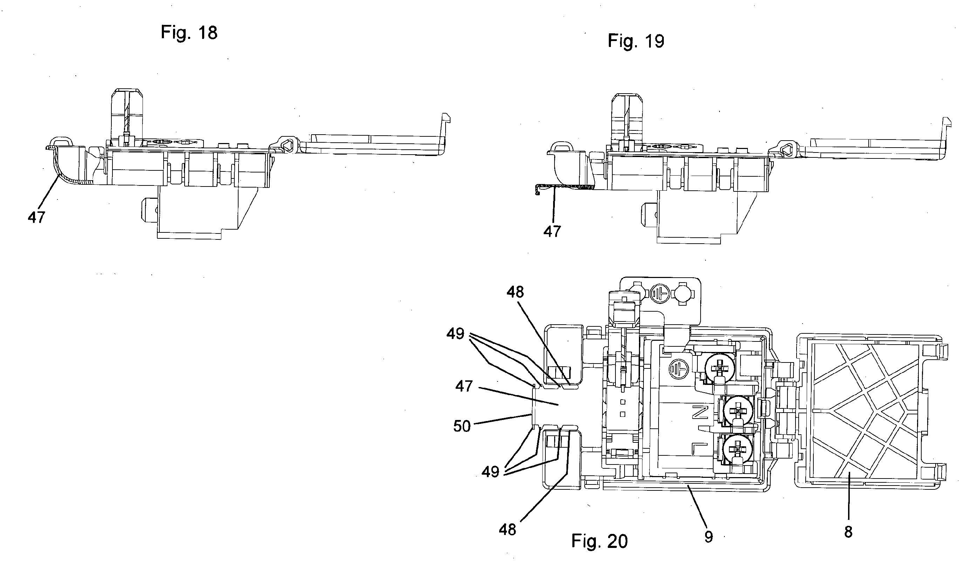

In Fig. 18 und Fig. 19 sind Seitenansichten dargestellt, wobei die zwei Positionen der Lasche 47 dargestellt sind, in Fig. 18 für eine vertikale Auslenkung des in dieser Ansicht nicht dargestellten Kabels 7 und in Fig. 19 für eine horizontale Auslenkung des in dieser Ansicht nicht dargestellten Kabels 7. Das Anschlusskabel 7 kann je nach Bauart der Anschlussvorrichtung 1 im Gehäuse des elektrischen Gerätes mit horizontaler oder vertikaler Führung montiert werden. Weitere Positionen der Lasche 47 sind nicht auszuschließen, um weitere Auslenkungen des Kabels 7 aus der Anschlussvorrichtung 1 vornehmen zu können.

In Fig. 20 ist die Anschlussvorrichtung 1 nach der Ausführungsform der Fig. 15 nochmals dargestellt.

Weitere Ausführungsformen für die Mittel zur Auslenkung des Kabels 7 sind nicht auszuschließen.

Weitere Ausführungsformen der erfindungsgemäßen Anschlussvorrichtung 1, die hier nicht dargestellt und beschrieben wurden, sind nicht aus der Erfindung auszuschließen.

### Bezugzeichen:

1. Anschlussvorrichtung
2. Gehäuse
3. Stanzteil-Modul 3a, 3b, 3c
4. Stanzteil
5. Gerät-Gehäuse
6. Aussparung
7. Kabel
8. Gehäuse-Oberteil, Deckel
9. Gehäuse-Unterteil
10. Zugentlastung
11. Leiter 11a, 11b, 11c
12. Erdungskontakt
13. Kabeldurchführung
14. Schwenkarm
15. Drehlager
16. Führungselement
17. Schraube
18. Arretierung
19. Rahmen
20. federnde Elemente
21. Abstützfläche
22. Bügel
23. Stecker
24. Lasche
25. Führungsschiene
26. Rastelement
27. Rastelement
28. federndes Element
29. Rastnase
30. Lasche
31. Nase
32. Nase
33. federndes Element
34. Rastelement
35. Noppe
36. Rastkante
37. Rahmen
38. federndes Element
39. Rastnase
40. Aussparung
41. Filmscharnier
42. Drehlager
43. Drehachse
44. Lasche
45. Vertiefung
46. Aussparung
47. flexible Lasche
48. Seitenwand
49. Spitzen
50. Ende von 47
51. elektrische Leitung
52. Aussparung
R: Einsteckrichtung
H: horizontale Richtung
V: vertikale Richtung
W: Winkel

## Patentansprüche

1. Anschlussvorrichtung zum elektrischen Verbinden eines Kabels (7) mit zumindest einer elektrischen Leitung (51) an einem elektrischen Gerät,
- mit einem Gehäuse (2),
- wobei das Gehäuse (2) zumindest zum Teil in einem elektrischen Gerät-Gehäuse (5), vorzugsweise eingesteckt, angeordnet ist,
- wobei das Kabel (7) im Gehäuse (2) angeschlossen ist und aus der Anschlussvorrichtung (1) herausragt,
**dadurch gekennzeichnet, dass**
die Anschlussvorrichtung Mittel aufweist, die die Auslenkung des Kabels (7) aus der Anschlussvorrichtung (1) wahlweise in vertikaler (V) und/oder horizontaler (H) Richtung vorgeben, wobei die Mittel als Lasche (47), vorzugsweise flexibel und/oder insbesondere ausbrechbar, ausgebildet sind.

2. Anschlussvorrichtung (1) nach dem Anspruch 1, **dadurch gekennzeichnet, dass**
die Mittel im oder am Gehäuse (2) angeordnet sind und/oder dass die Mittel als Führung bzw. Abstützung für das Kabel (7) vorgesehen sind.

3. Anschlussvorrichtung (1) nach Anspruch 1 oder 2, **dadurch gekennzeichnet, dass**
das Kabel (7) aus der Anschlussvorrichtung (1) nicht über das Gehäuse (2) herausragt.

4. Anschlussvorrichtung (1) nach einem der vorhergehenden Ansprüche, **dadurch gekennzeichnet, dass**
die Lasche (47) seitlich Spitzen (49) aufweist, die mit den jeweiligen Seitenwänden (48) des Gehäuses (2) verbunden sind.

5. Anschlussvorrichtung (1) nach einem der vorhergehenden Ansprüche, **dadurch gekennzeichnet, dass**
die Lasche (47) seitlich Spitzen (49) aufweist, die von den jeweiligen Seitenwänden (48) des Gehäuses (2) abgebrochen bzw. abgetrennt sind und/oder dass das freie Ende (50) der Lasche (47) sich auf dem Gerät-Gehäuse (5) abstützt.

6. Anschlussvorrichtung (1) nach einem der vorhergehenden Ansprüche, **dadurch gekennzeichnet, dass** zumindest ein Bügel (22) am Gehäuse (2) zur Fixierung des Kabels (7), insbesondere mit einem Kabelbinder, vorhanden ist.

7. Anschlussvorrichtung (1) nach dem Anspruch 1, wobei das Gehäuse (2) zumindest ein Gehäuse-Unterteil (9) und ein Gehäuse-Oberteil (8) aufweist, **dadurch gekennzeichnet, dass**
das Gehäuse-Unterteil (9) zumindest eine Lasche (44) aufweist, die als Halterung für das Gehäuse-Oberteil (8) vorgesehen ist.

8. Anschlussvorrichtung nach einem der vorhergehenden Ansprüche,
- wobei das Gehäuse (2) zumindest ein Gehäuse-Unterteil (9) und ein Gehäuse-Oberteil (8) aufweist,
- mit zumindest einem Stanzteil (4) zur elektrischen Verbindung des Kabels (7) mit zumindest einer elektrischen Leitung (51), das im Gehäuse (2) vorhanden ist,
- wobei das Gehäuse (2) zumindest zum Teil in einem elektrischen Gerät-Gehäuse (5), vorzugsweise eingesteckt, angeordnet ist,
**dadurch gekennzeichnet, dass**
die Anschlussvorrichtung (1) ein Stanzteil-Modul (3) aufweist, wobei zumindest ein Stanzteil (4) im Stanzteil-Modul (3) angeordnet ist und wobei das Stanzteil-Modul (3) im Gehäuse-Unterteil (9) eingesetzt ist.

9. Anschlussvorrichtung (1) nach dem Oberbegriff des Anspruchs 8, insbesondere nach Anspruch 8, **dadurch gekennzeichnet, dass** zumindest ein Stanzteil (4) abgewinkelt ist.

10. Anschlussvorrichtung (1) nach Anspruch 8 oder 9, **dadurch gekennzeichnet, dass**
das Stanzteil-Modul (3) in einer Aussparung (52) des Gehäuse-Unterteils (9) angeordnet ist und/oder
das Stanzteil-Modul (3) im Gehäuse-Unterteil (9) eingeschnappt und/oder austauschbar ist und/oder
das Stanzteil-Modul (3) einen Rahmen (19) aufweist, der passend zum Einsatz im Gehäuse-Unterteil (9) ist.

11. Anschlussvorrichtung (1) nach einem der Ansprüche 8 bis 10, **dadurch gekennzeichnet, dass**
das Gehäuse-Unterteil (9) Rastelemente, vorzugsweise als federnde Elemente (20) und Abstützfläche (21), aufweist, die für die Befestigung des Rahmens (19) des Stanzteil-Moduls (3) vorgesehen sind.

12. Anschlussvorrichtung (1) nach dem Oberbegriff des Anspruchs 8, wobei zumindest eine Schraube (17) zur Befestigung des Leiters (11) mit dem Stanzteil (4) vorgesehen ist, **dadurch gekennzeichnet, dass** zumindest eine Arretierung (18) für die Schraube (17) im offenen Zustand vorgesehen ist und/oder
wobei die Arretierung (18) am Stanzteil-Modul (3) angeordnet ist.

13. Anschlussvorrichtung (1) nach dem Oberbegriff des Anspruchs 8, wobei eine Zugentlastung (10) zum Arretieren des Kabels (7) in der Anschlussvorrichtung (1) vorhanden ist, **dadurch gekennzeichnet, dass** im montierten Zustand die Zugentlastung (10) mittels Elemente des Gehäuse-Oberteils (8) gegen ein ungewolltes Öffnen gesichert ist.

14. Elektrisches Gerät mit einer Anschlussvorrichtung (1) nach einem der vorhergehenden Ansprüche.

15. Elektrisches Gerät nach Anspruch 14, **dadurch gekennzeichnet, dass** das Gerät-Gehäuse (5) eine Vertiefung (45) für die Weiterführung des Kabels (7) aufweist.

## Claims

1. Connection device for electrically connecting a cable (7) having at least one electric conductor (51) to an electric device,
- having a housing (2),
- the housing (2) being at least partly arranged in an electric device housing (5), preferably plugged in,
- the cable (7) being connected in the housing (2) and projecting out of the connection device (1),
**characterized in that**
the connection device has means which predefine the deflection of the cable (7) out of the connection device (1) optionally in the vertical (V) and/or horizontal (H) direction, wherein the means are formed as a flap (47), preferably flexible and/or in particular capable of being broken out.

2. Connection device (1) according to Claim 1, **characterized in that**
the means are arranged in or on the housing (2) and/or **in that** the means are provided as a guide or support for the cable (7).

3. Connection device (1) according to Claim 1 or 2, **characterized in that**
the cable (7) does not project out of the connection device (1) over the housing (2).

4. Connection device (1) according to one of the preceding claims, **characterized in that**
the flap (47) has lateral tips (49) which are connected to the respective side walls (48) of the housing (2).

5. Connection device (1) according to one of the preceding claims, **characterized in that**
the flap (47) has lateral tips (49) which are broken off or separated from the respective side walls (48) of the housing (2), and/or **in that** the free end (50) of the flap (47) is supported on the device housing (5) .

6. Connection device (1) according to one of the preceding claims, **characterized in that** there is at least one bracket (22) on the housing (2) for fixing the cable (7), in particular with a cable tie.

7. Connection device (1) according to Claim 1, the housing (2) having at least one lower housing part (9) and an upper housing part (8), **characterized in that** the lower housing part (9) has at least one lug (44), which is provided as a holder for the upper housing part (8).

8. Connection device according to one of the preceding claims,
- the housing (2) having at least one lower housing part (9) and an upper housing part (8),
- having at least one punched part (4) for the electrical connection of a cable (7) to at least one electric conductor (51) which is present in the housing (2),
- the housing (2) being at least partly arranged in an electric device housing (5), preferably plugged in,
**characterized in that**
the connection device (1) has a stamped part module (3), wherein at least one stamped part (4) is arranged in the stamped part module (3), and wherein the stamped part module (3) is inserted into the lower housing part (9).

9. Connection device (1) according to the preamble of claim 8, in particular according to Claim 8, **characterized in that** at least one stamped part (4) is angled.

10. Connection device (1) according to Claim 8 or 9, **characterized in that**
the stamped part module (3) is arranged in a cutout (52) of the lower housing part (9) and/or
the stamped part module (3) is snapped into the lower housing part (9) and/or is replaceable and/or the stamped part module (3) has a frame (19) which is suitable for insertion into the lower housing part (9).

11. Connection device (1) according to one of Claims 8 to 10, **characterized in that**
the lower housing part (9) has latching elements, preferably as spring elements (20) and supporting surface (21), which are provided for the fixing of the frame (19) of the stamped part module (3).

12. Connection device (1) according to the preamble of Claim 8, at least one screw (17) being provided for fixing the conductor (11) to the stamped part (4), **characterized in that**
at least one locking means (18) for the screw (17) in the open state is provided and/or
wherein the locking means (18) is arranged on the stamped part module (3).

13. Connection device (1) according to the preamble of Claim 8, there being a strain relief (10) for locking the cable (7) in the connection device (1), **characterized in that**
in the mounted state, the strain relief (10) is secured against unintended opening by means of elements of the upper housing part (8).

14. Electric device having a connection device (1) according to one of the preceding claims.

15. Electric device according to Claim 14, **characterized in that** the device housing (5) has a recess (45) for guiding the cable (7) onward.

## Revendications

1. Dispositif de raccordement pour la liaison électrique d'un câble (7) avec au moins une ligne électrique (51) à un appareil électrique,
- avec un boîtier (2),
- dans lequel le boîtier (2) est disposé, de préférence enfiché, au moins en partie dans un boîtier d'appareil électrique (5),
- dans lequel le câble (7) est raccordé dans le boîtier (2) et sort du dispositif de raccordement (1),
**caractérisé en ce que** le dispositif de raccordement présente des moyens, qui définissent la déviation du câble (7) hors du dispositif de raccordement (1) au choix en direction verticale (V) et/ou horizontale (H), dans lequel les moyens sont réalisés sous la forme d'une patte (47), de préférence flexible et/ou en particulier cassable.

2. Dispositif de raccordement (1) selon la revendication 1, **caractérisé en ce que** les moyens sont disposés dans ou sur le boîtier (2) et/ou **en ce que** les moyens sont prévus comme guidage ou appui pour le câble (7) .

3. Dispositif de raccordement (1) selon la revendication 1 ou 2, **caractérisé en ce que** le câble (7) ne sort pas du dispositif de raccordement (1) par le boîtier (2).

4. Dispositif de raccordement (1) selon l'une quelconque des revendications précédentes, **caractérisé en ce que** la patte (47) présente latéralement des pointes (49), qui sont reliées aux parois latérales respectives (48) du boîtier (2) .

5. Dispositif de raccordement (1) selon l'une quelconque des revendications précédentes, **caractérisé en ce que** la patte (47) présente latéralement des pointes (49), qui sont rompues ou séparées des parois latérales respectives (48) du boîtier (2) et/ou **en ce que** l'extrémité libre (50) de la patte (47) s'appuie sur le boîtier d'appareil (5).

6. Dispositif de raccordement (1) selon l'une quelconque des revendications précédentes, **caractérisé en ce qu'**il se trouve au moins un étrier (22) sur le boîtier (2) pour la fixation du câble (7), en particulier avec une attache de câble.

7. Dispositif de raccordement (1) selon la revendication 1, dans lequel le boîtier (2) présente au moins une partie inférieure de boîtier (9) et une partie supérieure de boîtier (8), **caractérisé en ce que** la partie inférieure de boîtier (9) présente au moins une patte (44), qui est prévue comme support pour la partie supérieure de boîtier (8).

8. Dispositif de raccordement selon l'une quelconque des revendications précédentes,
- dans lequel le boîtier (2) présente au moins une partie inférieure de boîtier (9) et une partie supérieure de boîtier (8),
- avec au moins une pièce estampée (4), qui est présente dans le boîtier (2), pour la liaison électrique du câble (7) avec au moins une ligne électrique (51),
- dans lequel le boîtier (2) est disposé, de préférence enfiché, au moins en partie dans un boîtier d'appareil électrique (5),
**caractérisé en ce que** le dispositif de raccordement (1) présente un module de pièces estampées (3), dans lequel au moins une pièce estampée (4) est disposée dans le module de pièces estampées (3) et dans lequel le module de pièces estampées (3) est introduit dans la partie inférieure de boîtier (9).

9. Dispositif de raccordement (1) selon le préambule de la revendication 8, en particulier selon la revendication 8, **caractérisé en ce qu'**au moins une pièce estampée (4) est coudée.

10. Dispositif de raccordement (1) selon la revendication 8 ou 9, **caractérisé en ce que**
le module de pièces estampées (3) est disposé dans une découpe (52) de la partie inférieure de boîtier (9), et/ou
le module de pièces estampées (3) est encliqueté et/ou est échangeable dans la partie inférieure de boîtier (9), et/ou
le module de pièces estampées (3) présente un cadre (19) qui peut s'insérer de façon ajustée dans la partie inférieure de boîtier (9).

11. Dispositif de raccordement (1) selon l'une quelconque des revendications 8 à 10, **caractérisé en ce que** la partie inférieure de boîtier (9) présente des éléments d'encliquetage, de préférence sous la forme d'éléments élastiques (20) et de face d'appui (21), qui sont prévus pour la fixation du cadre (19) du module de pièces estampées (3).

12. Dispositif de raccordement (1) selon le préambule de la revendication 8, dans lequel il est prévu au moins une vis (17) pour la fixation du conducteur (11) à la pièce estampée (4), **caractérisé en ce qu'**il est prévu au moins un arrêt (18) pour la vis (17) dans l'état ouvert et/ou dans lequel l'arrêt (18) est disposé sur le module de pièces estampées (3).

13. Dispositif de raccordement (1) selon le préambule de la revendication 8, dans lequel il se trouve une décharge de traction (10) pour bloquer le câble (7) dans le dispositif de raccordement (1), **caractérisé en ce que** dans l'état monté la décharge de traction (10) est protégée contre une ouverture involontaire au moyen d'éléments de la partie supérieure de boîtier (8).

14. Appareil électrique avec un dispositif de raccordement (1) selon l'une quelconque des revendications précédentes.

15. Appareil électrique selon la revendication 14, **caractérisé en ce que** le boîtier d'appareil (5) présente un creux (45) pour le prolongement du câble (7).
